# FASCICULE DE BREVET EUROPEEN

(11) **EP 3 132 399 B1**
(45) Date de publication et mention de la délivrance du brevet: **04.09.2024**
(21) Numéro de dépôt: 15714526.9
(22) Date de dépôt: 10.04.2015
(51) Int. Cl.: G06Q 20/02, G06Q 20/32, G06Q 20/34

(54) **PROCÉDÉ DE TRAITEMENT DE DONNÉES TRANSACTIONNELLES, DISPOSITIF ET PROGRAMME CORRESPONDANT**
VERFAHREN ZUR VERARBEITUNG VON TRANSAKTIONSDATEN, VORRICHTUNG UND ENTSPRECHENDES PROGRAMM
METHOD FOR PROCESSING TRANSACTION DATA, DEVICE AND CORRESPONDING PROGRAM

(30) Priorité: 18.04.2014 FR 1453568
(43) Date de publication de la demande: 22.02.2017
(73) Titulaire: Banks and Acquirers International Holding, 75015 Paris (FR)
(72) Inventeur: QUENTIN, Pierre, F-95880 Enghien-les-bains (FR)
(74) Mandataire: Germain Maureau
(86) Numéro de dépôt international: PCT/EP2015/057836
(87) Numéro de publication internationale: WO 2015/158618

(56) Documents cités:
- EP-A1- 1 965 596
- WO-A1-2010/032216
- WO-A1-2014/048990
- FR-A1- 2 945 141
- PASCAL URIEN ET AL: "Towards a secure Cloud of Secure Elements concepts and experiments with NFC mobiles", COLLABORATION TECHNOLOGIES AND SYSTEMS (CTS), 2013 INTERNATIONAL CONFERENCE ON, IEEE, 20 May 2013 (2013-05-20), pages 166 - 173, XP032441887, ISBN: 978-1-4673-6403-4, DOI: 10.1109/CTS.2013.6567224
- RAINER SCHAMBERGER ET AL: "Components for an interoperable NFC mobile payment ecosystem", NEAR FIELD COMMUNICATION (NFC), 2013 5TH INTERNATIONAL WORKSHOP ON, IEEE, 5 February 2013 (2013-02-05), pages 1 - 5, XP032352507, ISBN: 978-1-4673-4837-9, DOI: 10.1109/NFC.2013.6482440
- KYRILLIDIS LAZAROS ET AL: "Card-Present Transactions on the Internet Using the Smart Card Web Server", 2013 12TH IEEE INTERNATIONAL CONFERENCE ON TRUST, SECURITY AND PRIVACY IN COMPUTING AND COMMUNICATIONS, IEEE, 16 July 2013 (2013-07-16), pages 611 - 619, XP032529615, DOI: 10.1109/TRUSTCOM.2013.75
- URIEN P ED - KONSTANTOPOULOS CHARALAMPOS BELLAVISTA PAOLO HUANG CHI-FU TURGUT DAMLA: "Internet card, a smart card as a true Internet node", COMPUTER COMMUNICATIONS, ELSEVIER SCIENCE PUBLISHERS BV, AMSTERDAM, NL, vol. 23, no. 17, 1 November 2000 (2000-11-01), pages 1655 - 1666, XP004238469, ISSN: 0140-3664, DOI: 10.1016/S0140-3664(00)00252-8

## Description

### 1. Domaine de l'invention

L'invention se rapporte au domaine des terminaux de paiement. La technique se rapporte plus particulièrement à des terminaux de paiement pouvant être mis en oeuvre à l'aide d'un terminal d'utilisateur (tel qu'un terminal de communication de type smartphone, tablette, PDA ou ordinateur personnel).

L'invention s'inscrit dans un nouveau paradigme de mise en oeuvre d'un paiement. Plus particulièrement, l'invention s'inscrit dans un système de paiement dans lequel l'utilisateur est muni d'un dispositif de paiement. Il s'agit de permettre à l'utilisateur de réaliser des paiements à l'aide d'un dispositif en sa possession afin de garantir un paiement de type "card présent" même pour des paiements effectués pour des services en ligne.

### 2. Art Antérieur

De nombreuses solutions ont été proposées pour permettre à des utilisateurs d'effectuer des paiements à l'aide d'un terminal de communication tout en utilisant physiquement une carte de paiement (c'est à dire en utilisant les informations disponibles sur une puce ou sur une bande magnétique). Un tel type de paiement est appelé paiement de type "card present", qui diffère d'un paiement de type "card non présent" dans lequel ce sont les informations inscrites sur la carte (numéro de carte, non du titulaire, date de validité) qui sont utilisées. Il est communément admis que des paiements (des transactions) qui sont effectuées en utilisant les données de la puce ou de la bande magnétique ont un degré de sécurisation supérieur aux paiements effectués en utilisant les informations inscrites sur la carte elle-même. Il est donc préférable que tout paiement puisse soit réalisé en mode "card present". L'essor des paiements en ligne a mis en évidence un besoin important. En effet, le nombre de paiements frauduleux effectués sur Internet a permis de prendre conscience de la nécessité de sécuriser ce type de paiement afin de juguler les fraudes.

Ainsi, par exemple, le dispositif de paiement décrit dans le brevet US2005/0236480 permet de se connecter à un terminal de communication de type téléphone. Un tel dispositif assure en théorie que le paiement ne puisse pas être répudié. C'est à dire que le paiement, dans la mesure où il a été effectué en utilisant une carte bancaire appartenant à l'utilisateur du terminal de communication et du dispositif adjoint, ne puisse pas ultérieurement faire l'objet d'une contestation de la part de l'utilisateur. Un tel dispositif de paiement est intéressant d'un point de vue théorique : il permet en effet à l'utilisateur de connecter un dispositif complémentaire à son téléphone pour le transformer en terminal de paiement. Malheureusement, en pratique, un tel dispositif se heurte à de nombreux problèmes. Le premier est que ce dispositif est adapté à un modèle de terminal particulier. Il est nécessaire de prévoir un modèle de dispositif pour chaque modèle de terminal. Compte tenu de nombre très important de modèles de téléphones, une telle solution n'est pas économiquement viable. En second lieu, un tel dispositif peut être aisément compromis. Cela signifie qu'il est relativement aisé de subtiliser temporairement un tel dispositif, de le modifier (par exemple pour introduire un module de fraude) et d'utiliser par la suite les données obtenues par le module de fraude pour cloner une carte. En troisième lieu, un tel dispositif n'est pas adapté à une utilisation contemporaine des moyens de paiement. En effet, un dispositif de ce type nécessite une transmission d'une transaction de paiement par l'intermédiaire d'un SMS (de l'anglais pour "Short Message Service") ou d'un autre type de message équivalent (i.e. utilisant une architecture de téléphonie 2G). Or, actuellement, des moyens de réception et de transmission de données basés sur des protocoles Web sont largement plébiscités, notamment de fait de leur universalité.

Les documents WO 2010/032216 et Towards a Secure Cloud of Secure Elements Concepts and Experiments with NFC Mobiles, Pascal Urien et Selwyn Piramuthu décrivent d'autres procédés de traitement de données transactionnelles représentatives d'un paiement effectué par un utilisateur à partir d'un terminal de communication.

Ainsi, il existe un besoin de fournir une technique qui permette de réaliser un paiement de type "card present" tout en étant adapté d'une part à des impératifs de passage à l'échelle, de sécurisation des données de la carte bancaire et des transactions.

### 3. Résumé de l'invention

L'invention ne pose pas ces problèmes de l'art antérieur. Plus particulièrement, l'invention apporte une solution simple à la problématique préalablement identifiée. L'invention se rapporte ainsi à une mise en oeuvre, au sein d'un terminal de communication d'un utilisateur, d'un terminal de paiement virtuel. Plus spécifiquement, le terminal de paiement virtuel est mis en oeuvre au sein d'un espace sécurisé du terminal de communication, lequel espace sécurisé comprend une zone de mémorisation inviolable pouvant être mise en oeuvre pour exécuter des transactions, et notamment des transactions de paiement.

Plus particulièrement l'invention porte sur un procédé tel que défini aux revendications 1 à 6

L'invention se rapporte également à un dispositif tel que défini à la revendication 7.

L'invention se rapporte également à un terminal de communication tel que défini à la revendication 8.

Ce programme peut utiliser n'importe quel langage de programmation, tel que défini à la revendication 9 et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, l'invention est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit ci-dessous pour le module concerné. Un tel composant logiciel est exécuté par un processeur de données d'une entité physique (terminal, serveur, passerelle, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en oeuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Chaque composante du système précédemment décrit met bien entendu en oeuvre ses propres modules logiciels.

Les différents modes de réalisation mentionnés ci-dessus sont combinables entre eux pour la mise en oeuvre de l'invention.

### 4. Dessins

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente un synoptique de la technique proposée ;
- la figure 2 présente un synoptique de la technique proposée, ... ;
- la figure 3 décrit un dispositif; Non revendiqué
- la figure 4 décrit un serveur comprenant une pluralité de cartes de paiement virtuelles.

### 5. Description

### 5.1. Rappel du principe général

Comme explicité préalablement, le principe général de la technique proposée consiste à introduire, au sein du terminal de communication de l'utilisateur, un terminal de paiement virtuel (vPos). Un tel terminal de paiement virtuel se différentie d'un terminal de paiement physique en ce qu'il met en oeuvre le processeur du terminal de communication qui lui est affecté. Par ailleurs, le terminal de paiement virtuel dispose d'un accès à une zone de mémoire sécurisée au sein de laquelle il est en mesure de réaliser des opérations cryptographiques. Un tel terminal de paiement comprend une interface de réception de commandes en provenance du terminal de communication, pour effectuer des transactions. De ce point de vue, le terminal de communication se comporte comme une sorte de caisse enregistreuse qui est apte à transmettre, au terminal de paiement virtuel, des commandes pour le paiement (par exemple un montant de transaction). Lorsqu'il reçoit une commande d'activation et un montant de transaction, le terminal de paiement virtuel (vPos) est apte à mettre en oeuvre une transaction de paiement, selon au moins deux modes de réalisation décrit ultérieurement.

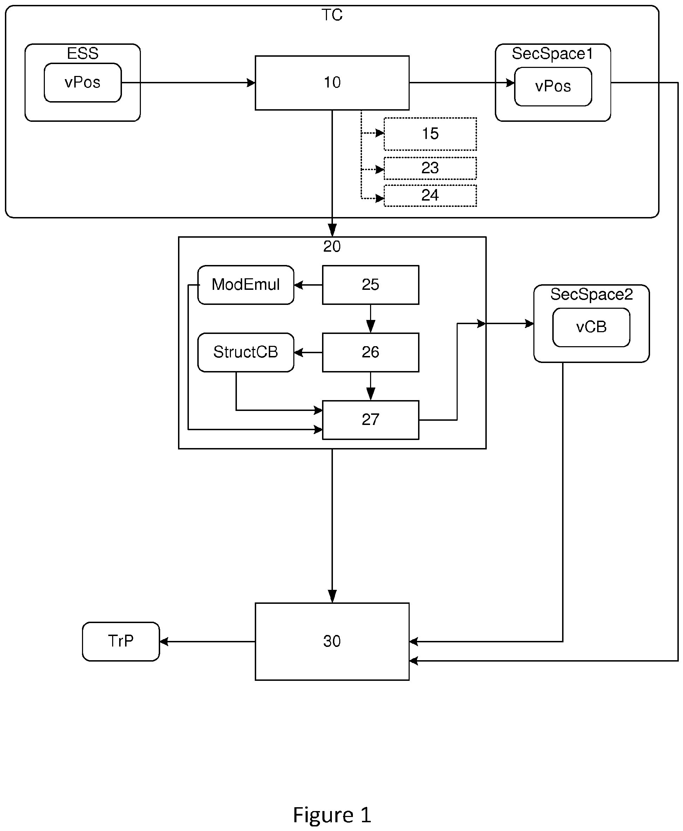

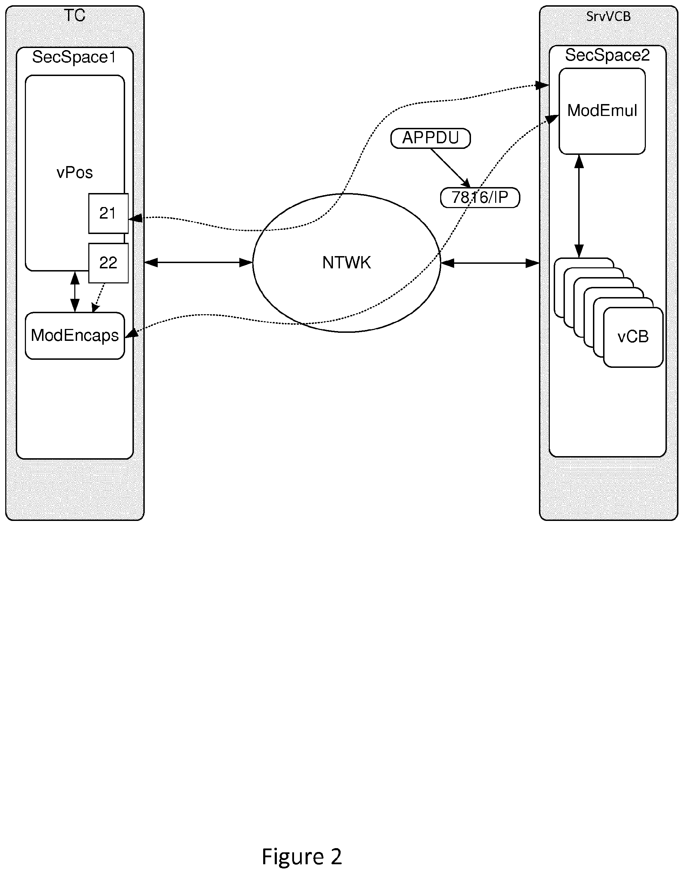

On présente, en relation avec la figure 1 et la figure 2, les étapes générales du procédé de la présente technique. Un tel procédé de traitement de données transactionnelles représentatives d'un paiement effectué par un utilisateur à partir d'un terminal de communication (TC) comprend :
- une étape de chargement (10) d'un terminal de paiement virtuel (vPos), au sein d'un premier espace mémoire sécurisé (SecSpace1) du terminal de communication (TC), ledit terminal virtuel (vPos) se présentant sous la forme d'un module logiciel enregistré au sein d'un espace de stockage sécurisé (ESS) du terminal de communication (TC) ;
- une étape de chargement (20), au sein d'un deuxième espace sécurisé (SecSpace2), d'au moins une carte de paiement virtuelle (vCB) ;
- une étape de traitement (30) par le terminal de paiement virtuel (vPos) d'une transaction de paiement (TrP) à l'aide de ladite au moins une carte de paiement virtuelle (vCB).

L'étape que l'étape de chargement (20) d'une carte de paiement virtuelle (vCB) comprend :
- une étape de de chargement (25) d'un module logiciel d'émulation (modEmul) de carte de paiement virtuelle ;
- une étape d'obtention (26) d'une structure de données de carte de paiement (StructCB)
- une étape d'instanciation (27), au sein du deuxième espace sécurisé (SecSpace2), de la carte de paiement virtuelle (vCB) à l'aide du module logiciel d'émulation (modEmul) et de la structure de données de carte de paiement (StructCB).

En d'autres termes, selon la technique proposée, le terminal de paiement virtuel est mis en oeuvre de la façon suivante :
- l'utilisateur utilise son terminal de communication pour effectuer un achat auprès d'un service en ligne (un site web). Il sélectionne un ou plusieurs articles et débute les opérations de paiement (généralement par l'utilisation d'un bouton de type "effectuer paiement" dans une page Web ou dans une application dédiée (par exemple l'application Amazon(tm), alibaba, ebay, etc.).
- le service ou l'application détecte que le terminal dispose d'un terminal de paiement virtuel. Au lieu de requérir la saisie de données relatives à une carte de paiement (numéros de carte, nom du titulaire, date de validité), le service ou l'application déclenche la mise en oeuvre du terminal virtuel selon la technique proposée.
- le terminal virtuel est chargé en mémoire (de préférence en mémoire sécurisée secspace1 afin que son fonctionnement soit garanti). Alternativement il est sorti de veille (cas ou le terminal de paiement virtuel est chargé au démarrage du terminal de communication ou cas où le terminal de paiement a déjà été chargé préalablement).
- de manière optionnelle, un message d'avertissement est adressé (15) à l'utilisateur, l'informant qu'une opération sensible est sur le point d'être réalisée;
- le terminal virtuel requiert la saisie d'un code d'identification personnel de la part de l'utilisateur; ce code d'identification personnel correspond par exemple au code secret d'une carte de paiement (aussi appelé code PIN). Alternativement, ce code d'identification personnel peut également correspondre à un schéma devant être tracé par l'utilisateur ou encore à une signature d'une empreinte digitale devant être produite (si le terminal de communication comprend un lecteur d'empreinte digitales) ou encore à une saisie de zone
   de;
- Pour la suite on suppose que le code saisi par l'utilisateur est correct. En cas de mauvais code, un nombre maximal d'essais est autorisé. Lorsque ce nombre d'essais est atteint ou dépassé (par exemple trois), le terminal de paiement virtuel se met hors fonction : cette mise hors fonction provoque l'effacement de la mémoire sécurisée ainsi que la suppression du terminal de paiement virtuel et/ou la suppression de données sensibles du terminal virtuel. Le terminal de communication ne peut alors plus opérer de terminal de paiement virtuel jusqu'à ce que ce terminal de paiement virtuel soit à nouveau installé sur le terminal de communication.
- La carte de paiement virtuelle est par la suite chargée dans un deuxième espace sécurisé. Il s'agit d'un espace distant, présent sur un serveur auquel le terminal de communication est connecté (SecSpace2, figure 2) Dan ce deuxième cas, des étapes d'identification (21) et de chargement (22) d'une module de communication réseaux sont mise en oeuvre afin d'échanger des trames de commande (APPDU) du protocole 7816 sur le réseau de communication (par exemple encapsulées dans des trames IP).
- de manière complémentaire, lorsque cela est envisageable, le terminal virtuel requiert une sélection, par l'utilisateur, d'un moyen de paiement à utiliser (c'est par exemple le cas lorsque plusieurs cartes de paiement peuvent être utilisées par l'utilisateur comme une carte de paiement pour un premier établissement bancaire et une carte de paiement pour un deuxième établissement bancaire). Par ailleurs, il peut être envisagé de requérir une nouvelle saisie d'un code d'identification personnel spécifiquement attaché au moyen de paiement sélectionné, afin de renforcé la sécurisation (ceci est explicité par la suite dans le cadre d'une mise en oeuvre EMV). De manière optionnelle, donc, un message d'avertissement est affiché (23) à l'utilisateur, afin qu'il sélectionne (24) une carte de paiement parmi une pluralité de cartes de paiements disponibles;
- une vérification de la concordance du code d'identification personnel relativement au moyen de paiement sélectionné est réalisée par un mécanisme explicité par la suite.
- la terminal de paiement virtuel met alors en oeuvre le paiement en construisant une transaction de paiement, par exemple selon l'ensemble de protocoles SEPA et/ou EMV.
- Deux cas de figure se présentent par la suite :
- la transaction est correctement menée et un récapitulatif de paiement est affiché à l'écran du terminal de communication et/ou enregistré au sein de celui-ci;
- la transaction échoue (par exemple suite à un refus de l'établissement bancaire), et un message d'échec de transaction est affiché à l'écran puis le terminal de paiement virtuel est fermé (ou passé en mémoire cache sécurisée si cela est possible)).

Ainsi, au lieu d'utiliser un terminal complémentaire qui doit être apparié au terminal de communication, on utilise une zone de mémoire sécurisée du terminal de communication pour y exécuter un terminal de paiement virtuel. Comme on peut le noter, deux phases peuvent être décrites de manière complémentaire : l'installation de ce terminal de paiement virtuel au sein du terminal de communication et l'utilisation d'un moyen de paiement pour effectuer une transaction de paiement. L'installation du terminal de paiement virtuel au sein du terminal de communication est liée à une présence, au sein de ce terminal, d'une zone mémoire sécurisée. Une telle zone mémoire sécurisée est remarquable en ce qu'elle n'est accessible qu'à partir d'une portion sécurisée du système d'exploitation du terminal de communication, seule habilité à accéder à cette zone. L'installation de ce terminal de paiement virtuel passe donc par une utilisation de cette portion du système d'exploitation. Elle n'est pas détaillée plus avant, cette installation étant dépendante du système d'exploitation en tant que tel et des caractéristiques techniques de cette zone de mémoire sécurisée.

En revanche, la réalisation de la transaction à partir du moyen de paiement sélectionné fait pleinement partie de la présente technique. Une telle réalisation est effectuée de la manière suivante:
- l'utilisation d'une carte de paiement virtuelle, accessible par l'intermédiaire d'un réseau de communication sécurisé.

### 5.3. Utilisation d'une carte de paiement virtuelle, accessible par l'intermédiaire d'un réseau de communication sécurisé

Comme explicité préalablement, les protocoles 7816 définissent les APDU qui sont transmises une carte connectée à un lecteur de carte en mode contact. Dans ce mode de réalisation, on ne déroge pas à cette mise en oeuvre des protocoles 7816, ce qui en fait justement une caractéristique intéressante. Dans le cadre d'un terminal de paiement virtuel et connecté à une ferme de cartes bancaires, le terminal de paiement virtuel doit interroger une carte lors de la réalisation d'une transaction. Dans ce mode de réalisation, on propose donc une utilisation d'une carte bancaire virtuelle, dont les données sont stockées sur un serveur. Par ailleurs, dans ce mode de réalisation, le serveur peut avantageusement stocker et protéger une pluralité de cartes de paiement virtuelles appartenant à une pluralité de titulaires. On dispose ainsi, sur ce serveur, d'une "ferme" de cartes de paiement. Cette ferme permet de centraliser les cartes de paiement virtuelles.

Ainsi, dans ce mode de réalisation, les APDU sont transmis par l'intermédiaire du réseau de communication auquel le terminal de communication et le serveur sont connectés. On suppose, comme un prérequis, que le terminal de communication et le serveur ont établi une communication sécurisée entre eux et que les échanges ne peuvent pas être interceptés.

Dès lors le terminal de paiement virtuel comprend un module de transmission et de réception de commandes APDU qui fonctionne en conjonction avec un module d'encapsulation (également sécurisé et fonctionnant en zone de mémoire sécurisé) en charge de l'encapsulation et de la désencapsulation des commandes APDU. Ce module d'encapsulation permet de générer des trames (par exemple des trames IP) comprenant un ou plusieurs champs de données (dont la taille est variable en fonction de la MTU). Le serveur qui gère la ferme de carte de paiement virtuel comprend également un module d'encapsulation similaire destiné à effectuer des opérations similaires depuis le serveur

Typiquement, un champ de données d'une trame IP encapsulant des commandes APDU comprend trois parties:
- La première partie, dite entête, comprend les champs suivants :
   - identifiant Serveur de cartes: l'identifiant du serveur à l'origine de la demande de transaction ;
   - Identifiant vPos : identification du terminal virtuel. Cet identifiant doit permettre de remonter jusqu'à la version logicielle, l'opérateur du vPos, etc. ;
   - Numéro de trame vPos : numéro de la trame envoyée par vPos, permettant à la ferme de traiter les trames dans l'ordre. Ce numéro est incrémenté uniquement par le vPos, et uniquement recopié dans les trames venant de la ferme ;
   - identification carte : token permettant d'identifier la carte dans la ferme ;
   - Numéro de trame ferme : numéro de la trame échangée depuis la ferme, permettant au vPos de traiter les trames dans l'ordre ; A l'inverse, ce numéro est incrémenté par la ferme, et recopié par le vPos dans les trames retour ;
   - Champs propriétaire : champs constitué d'une longueur et d'un nombre d'octet à usage particulier ;
   - Longueur : longueur totale de la trame complète ;
- La deuxième partie comprend une trame iso7816 sans modification, que ce soit APDU ou TPDU.
- La troisième partie comprend une fin de trame qui est constituée d'un caractère de fin de trame spécifique.

Les avantages de ce mode de réalisation sont multiples. En premier lieu, il n'est pas nécessaire de disposer d'une espace de stockage sécurisé sur le terminal de communication. Ceci est avantageux car évite qu'une compromission du terminal de communication entraîne un vol des données bancaires de la carte virtuelle stockée sur le terminal de communication. En second lieu, ce mode de réalisation permet de sécuriser fortement l'accès au serveur qui centraliser les cartes de paiement virtuelles. Par ailleurs, ceci évite de devoir faire fonctionner une machine virtuelle simulant le fonctionnement de la carte de paiement virtuelle sur le terminal de communication. Dès lors cette simulation de fonctionnement de carte virtuelle est effectuée sur le serveur qui est un lieu de traitement plus sûr.

### 5.4. Autres caractéristiques et avantages 3

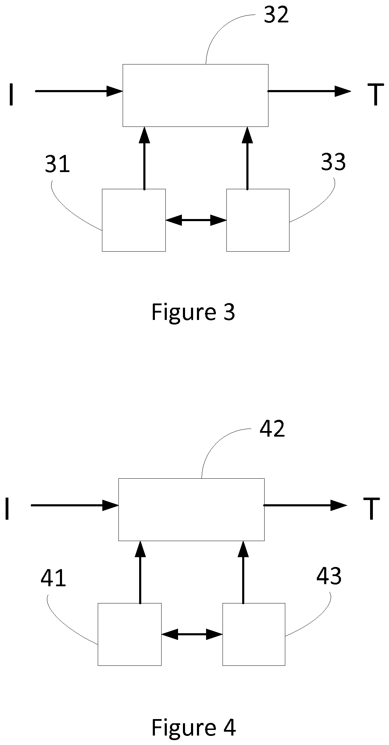

On décrit, en relation avec la figure 4, un serveur mis en oeuvre pour réaliser des opérations de paiement à partir d'un terminal de communication tout en opérant en mode « card présent », selon le procédé décrit préalablement.

Par exemple, le serveur comprend une mémoire 41 constituée d'une mémoire tampon, une unité de traitement 42, équipée par exemple d'un microprocesseur, et pilotée par le programme d'ordinateur 43, mettant en oeuvre un procédé de traitement de données transactionnelles.

À l'initialisation, les instructions de code du programme d'ordinateur 43 sont par exemple chargées dans une mémoire avant d'être exécutées par le processeur de l'unité de traitement 42. L'unité de traitement 42 reçoit en entrée au moins une donnée représentative d'un identifiant d'un terminal de paiement virtuel et d'une carte de paiement virtuelle à utiliser. Le microprocesseur de l'unité de traitement 42 met en oeuvre des étapes du procédé de traitement, selon les instructions du programme d'ordinateur 43 pour effectuer un chargement, d'un module logiciel d'émulation (modEmul) de carte de paiement virtuelle ; obtenir une structure de données de carte de paiement (StructCB) en fonction de l'identifiant de carte qui lui est fourni ; instancier au sein du deuxième espace sécurisé (SecSpace2), la carte de paiement virtuelle (vCB) et effectuer l'encapsulation et la des encapsulation des APDU et des RPDU destinés à cette carte de paiement virtuelle afin de mettre en oeuvre la transaction (au moyen d'un module d'encapsulation).

Pour cela, le serveur comprend, outre la mémoire tampon 41, des moyens de communications, tels que des modules de communication réseau, des moyens de transmission de donnée et éventuellement un processeur de chiffrement.

Ces moyens peuvent se présenter sous la forme d'un processeur particulier implémenté au sein du serveur, ledit processeur étant un processeur sécurisé. Selon un mode de réalisation particulier, ce serveur met en oeuvre une application particulière qui est en charge de la réalisation des transactions, cette application étant par exemple fournie par le fabricant du processeur en question afin de permettre l'utilisation dudit processeur. Pour ce faire, le processeur comprend des moyens d'identification uniques. Ces moyens d'identification uniques permettent d'assurer l'authenticité du processeur.

## Revendications

1. Procédé de traitement de données transactionnelles représentatives d'un paiement effectué par un utilisateur à partir d'un terminal de communication (TC), procédé **caractérisé en ce qu'**il comprend :
- une étape de chargement (10) d'un terminal de paiement virtuel (vPos), au sein d'un premier espace mémoire sécurisé (SecSpace1) du terminal de communication (TC), ledit terminal virtuel (vPos) se présentant sous la forme d'un module logiciel enregistré au sein d'un espace de stockage sécurisé du terminal de communication (TC) ;
- une étape de chargement (20), au sein d'un deuxième espace sécurisé (SecSpace2) situé sur un serveur (SrvVCB) connecté au terminal de communication (TC) par l'intermédiaire d'un réseau de communication (Ntwk), d'au moins une carte de paiement virtuelle (vCB), ladite carte de paiement virtuelle (vCB) étant instanciée par un module logiciel d'émulation (modEmul) mis en oeuvre sous la forme d'une exécution d'une machine virtuelle;
- une étape de traitement (30) par le terminal de paiement virtuel (vPos) d'une transaction de paiement, ladite étape de traitement comprenant :
- une étape d'échange de commandes ADPU entre ledit terminal de paiement virtuel (vPos) et ladite au moins une carte de paiement virtuelle (vCB) ;
- une étape de construction de ladite transaction de paiement selon les protocoles SEPA et/ou EMV, pour la mise en oeuvre dudit paiement.

2. Procédé de traitement de données transactionnelles selon la revendication 1, **caractérisé en ce que** l'étape de chargement (20) d'une carte de paiement virtuelle (vCB) comprend :
- une étape de de chargement (25) dudit module logiciel d'émulation (modEmul) de carte de paiement virtuelle ;
- une étape d'obtention (26) d'une structure de données de carte de paiement (StructCB)
- une étape d'instanciation (27), au sein du deuxième espace sécurisé (SecSpace2), de la carte de paiement virtuelle (vCB) à l'aide du module logiciel d'émulation (modEmul) et de la structure de données de carte de paiement (StructCB).

3. Procédé de traitement de données transactionnelles selon la revendication 1, **caractérisé en ce que** l'étape de chargement (20) d'une carte de paiement virtuelle (vCB) comprend :
- une étape d'affichage (23) sur un écran du terminal de communication, d'un ensemble de cartes de paiement virtuelles associées à l'utilisateur ;
- une étape de sélection (24), d'une carte de paiement virtuelle parmi l'ensemble de cartes de paiement affichée.

4. Procédé selon la revendication 1, **caractérisé en ce qu'**il comprend, postérieurement à l'étape de chargement (10) du terminal de paiement virtuel (vPos), une étape d'affichage (15) sur un écran du terminal de communication, d'une donnée représentative d'un passage en mode sécurisé.

5. Procédé de traitement de données transactionnelles selon la revendication 1, **caractérisé en ce que** l'étape de chargement (20) d'une carte de paiement virtuelle (vCB) comprend :
- une étape d'identification (21) par ledit terminal de paiement virtuel (vPos), du deuxième espace sécurisé (SecSpace2) au sein duquel la carte de paiement virtuelle (vCB) doit être chargée ; et
- une étape de chargement (22), au sein du premier espace mémoire sécurisé (SecSpace1), d'un module d'encapsulation (ModEncaps).

6. Procédé de traitement de données transactionnelles selon la revendication 5, **caractérisé en ce qu'**il comprend, pour au moins certaines des données échangées entre ledit terminal de paiement virtuel (vPos) et ladite carte de paiement virtuelle (vCB), au moins une étape de transmission d'une commande (APDU) audit serveur (SrvVCB) comprenant :
- une étape de création d'un entête de trame comprenant au moins un identifiant du terminal de paiement virtuel (vPos) et un identifiant de la carte de paiement virtuelle (vCB) ;
- une étape de remplissage d'une trame ledit entête, ladite commande, suivant un protocole d'échange de données déterminé,
- une étape de transmission de la trame à destination dudit serveur.

7. Dispositif de traitement de données transactionnelles représentatives d'un paiement effectué par un utilisateur à partir d'un terminal de communication (TC), dispositif **caractérisé en ce qu'**il comprend :
- des moyens de chargement d'un terminal de paiement virtuel (vPos), au sein d'un premier espace mémoire sécurisé (SecSpace1) du terminal de communication (TC), ledit terminal virtuel (vPos) se présentant sous la forme d'un module logiciel enregistré au sein d'un espace de stockage sécurisé du terminal de communication (TC) ;
- des moyens de chargement, au sein d'un deuxième espace sécurisé (SecSpace2) situé sur un serveur (SrvVCB) connecté au terminal de communication (TC) par l'intermédiaire d'un réseau de communication (Ntwk), d'au moins une carte de paiement virtuelle (vCB), ladite carte de paiement virtuelle (vCB) étant instanciée par un module logiciel d'émulation (modEmul) mis en oeuvre sous la forme d'une exécution d'une machine virtuelle;
- des moyens de traitement par le terminal de paiement virtuel (vPos) d'une transaction de paiement, lesdits moyens de traitement comprenant :
- des moyens d'échange de commandes ADPU entre ledit terminal de paiement virtuel (vPos) et ladite au moins une carte de paiement virtuelle (vCB) ;
- des moyens de construction de ladite transaction de paiement selon les protocoles SEPA et/ou EMV, pour la mise en oeuvre dudit paiement.

8. Terminal de communication **caractérisé en ce qu'**il intègre un dispositif de traitement de données transactionnelles selon la revendication 7.

9. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution d'un procédé de traitement de données transactionnelles selon la revendication 1, lorsqu'il est exécuté sur un ordinateur.

## Patentansprüche

1. Verfahren zum Verarbeiten von Transaktionsdaten, die eine Zahlung darstellen, die ein Benutzer von einem Kommunikationsendgerät (TC) aus ausgeführt hat, wobei das Verfahren **dadurch gekennzeichnet ist, dass** es Folgendes umfasst:
- einen Schritt des Ladens (10) eines virtuellen Zahlungsendgeräts (vPos) innerhalb einer ersten gesicherten Speicherbereichs (SecSpace1) des Kommunikationsendgeräts (TC), wobei das virtuelle Endgerät (vPos) in Form eines Softwaremoduls vorliegt, das innerhalb eines gesicherten Speicherbereichs des Kommunikationsendgeräts (TC) gespeichert ist;
- einen Schritt des Ladens (20) mindestens einer virtuellen Zahlungskarte (vCB) innerhalb eines zweiten gesicherten Bereichs (SecSpace2), der sich auf einem Server (SrvVCB) befindet, der mit Hilfe von einem Kommunikationsnetzwerk (Ntwk) mit dem Kommunikationsendgerät (TC) verbunden ist, wobei die virtuelle Zahlungskarte (vCB) durch ein Emulationssoftwaremodul (modEmul) instanziiert wird, das in Form einer Ausführung einer virtuellen Maschine implementiert ist;
- einen Schritt des Verarbeitens (30) einer Zahlungstransaktion durch das virtuelle Zahlungsendgerät (vPos), wobei der Verarbeitungsschritt Folgendes umfasst:
-- einen Schritt des Austauschens von ADPU-Befehlen zwischen dem virtuellen Zahlungsendgerät (vPos) und der mindestens einen virtuellen Zahlungskarte (vCB);
-- einen Schritt des Aufbauens der Zahlungstransaktion gemäß den SEPA- und/oder EMV-Protokollen zum Durchführen der Zahlung.

2. Verfahren zum Verarbeiten von Transaktionsdaten nach Anspruch 1, **dadurch gekennzeichnet, dass** der Schritt des Ladens (20) einer virtuellen Zahlungskarte (vCB) Folgendes umfasst:
- einen Schritt des Ladens (25) des Emulationssoftwaremoduls (modEmul) für virtuelle Zahlungskarten;
- einen Schritt des Erhaltens (26) einer Zahlungskartendatenstruktur (StructCB);
- einen Schritt des Instanziierens (27) der virtuellen Zahlungskarte (vCB) innerhalb des zweiten gesicherten Bereichs (SecSpace2) mittels des Emulationssoftwaremoduls (modEmul) und der Zahlungskartendatenstruktur (StructCB).

3. Verfahren zum Verarbeiten von Transaktionsdaten nach Anspruch 1, **dadurch gekennzeichnet, dass** der Schritt des Ladens (20) einer virtuellen Zahlungskarte (vCB) Folgendes umfasst:
- einen Schritt des Anzeigens (23) eines Satzes virtueller Zahlungskarten, die dem Benutzer zugeordnet sind, auf einem Bildschirm des Kommunikationsendgeräts;
- einen Schritt des Auswählens (24) einer virtuellen Zahlungskarte aus dem Satz der angezeigten Zahlungskarten.

4. Verfahren nach Anspruch 1, **dadurch gekennzeichnet, dass** es nach dem Schritt des Ladens (10) des virtuellen Zahlungsendgeräts (vPos) einen Schritt des Anzeigens (15) von Daten, die einen Übergang in den gesicherten Modus darstellen, auf einem Bildschirm des Kommunikationsendgeräts umfasst.

5. Verfahren zum Verarbeiten von Transaktionsdaten nach Anspruch 1, **dadurch gekennzeichnet, dass** der Schritt des Ladens (20) einer virtuellen Zahlungskarte (vCB) Folgendes umfasst:
- einen Schritt des Identifizierens (21) des zweiten gesicherten Bereichs (SecSpace2), in den die virtuelle Zahlungskarte (vCB) geladen werden muss, durch das virtuelle Zahlungsendgerät (vPos); und
- einen Schritt des Ladens (22) eines Kapselungsmoduls (ModEncaps) innerhalb des ersten gesicherten Speicherbereichs (SecSpace1).

6. Verfahren zum Verarbeiten von Transaktionsdaten nach Anspruch 5, **dadurch gekennzeichnet, dass** es für mindestens einige der zwischen dem virtuellen Zahlungsendgerät (vPos) und der virtuellen Zahlungskarte (vCB) ausgetauschten Daten mindestens einen Schritt des Übertragens eines Befehls (APDU) an den Server (SrvVCB) umfasst, der Folgendes umfasst:
- einen Schritt des Erstellens eines Frame-Headers, der mindestens einen Identifikator des virtuellen Zahlungsendgeräts (vPos) und einen Identifikator der virtuellen Zahlungskarte (vCB) umfasst;
- einen Schritt des Füllens eines Frames mit dem Header und dem Befehl gemäß einem bestimmten Datenaustauschprotokoll,
- einen Schritt des Übertragens des Frames an den Server.

7. Vorrichtung zum Verarbeiten von Transaktionsdaten, die eine Zahlung darstellen, die ein Benutzer von einem Kommunikationsendgerät (TC) aus ausgeführt hat, wobei die Vorrichtung **dadurch gekennzeichnet ist, dass** sie Folgendes umfasst:
- Mittel zum Laden eines virtuellen Zahlungsendgeräts (vPos) innerhalb eines ersten gesicherten Speicherbereichs (SecSpace1) des Kommunikationsendgeräts (TC), wobei das virtuelle Endgerät (vPos) in Form eines Softwaremoduls vorliegt, das innerhalb eines gesicherten Speicherbereichs des Kommunikationsendgeräts (TC) gespeichert ist;
- Mittel zum Laden mindestens einer virtuellen Zahlungskarte (vCB) innerhalb eines zweiten gesicherten Bereichs (SecSpace2), der sich auf einem Server (SrvVCB) befindet, der mit Hilfe von einem Kommunikationsnetzwerk (Ntwk) mit dem Kommunikationsendgerät (TC) verbunden ist, wobei die virtuelle Zahlungskarte (vCB) durch ein Emulationssoftwaremodul (modEmul) instanziiert wird, das in Form einer Ausführung einer virtuellen Maschine implementiert ist;
- Mittel zum Verarbeiten einer Zahlungstransaktion durch das virtuelle Zahlungsendgerät (vPos), wobei die Verarbeitungsmittel Folgendes umfassen:
-- Mittel zum Austauschen von ADPU-Befehlen zwischen dem virtuellen Zahlungsendgerät (vPos) und der mindestens einen virtuellen Zahlungskarte (vCB);
-- Mittel zum Aufbauen der Zahlungstransaktion gemäß den SEPA- und/oder EMV-Protokollen zum Durchführen der Zahlung.

8. Kommunikationsendgerät, das **dadurch gekennzeichnet ist, dass** es eine Vorrichtung zum Verarbeiten von Transaktionsdaten nach Anspruch 7 integriert.

9. Computerprogrammprodukt, das aus einem Kommunikationsnetzwerk herunterladbar und/oder auf einem computerlesbaren Medium gespeichert und/oder durch einen Mikroprozessor ausführbar ist, **dadurch gekennzeichnet, dass** es Programmcodeanweisungen zum Ausführen eines Verfahrens zum Verarbeiten von Transaktionsdaten nach Anspruch 1 umfasst, wenn es auf einem Computer ausgeführt wird.

## Claims

1. A method for processing transactional data representative of a payment made by a user from a communication terminal (TC), the method being **characterized in that** it comprises:
- a step of loading (10) a virtual payment terminal (vPos), within a first secure memory space (SecSpace1) of the communication terminal (TC), said virtual terminal (vPos) being in the form of a software module registered within a secure storage space of the communication terminal (TC);
- a step of loading (20), within a second secure space (SecSpace2) located on a server (SrvVCB) connected to the communication terminal (TC) via a communication network (Ntwk), at least one virtual payment card (vCB), said virtual payment card (vCB) being instantiated by an emulation software module (modEmul) implemented in the form of an execution of a virtual machine;
- a step of processing (30) by the virtual payment terminal (vPos) a payment transaction, said processing step comprising:
- a step of exchanging ADPU commands between said virtual payment terminal (vPos) and said at least one virtual payment card (vCB);
- a step of constructing said payment transaction according to the protocols SEPA and/or EMV, for the implementation of said payment.

2. The method for processing transactional data according to claim 1, **characterized in that** the step of loading (20) a virtual payment card (vCB) comprises:
- a step of loading (25) said emulation software module (modEmul) of the virtual payment card;
- a step of obtaining (26) a payment card data structure (StructCB)
- a step of instantiating (27), within the second secure space (SecSpace2), the virtual payment card (vCB) using the emulation software module (modEmul) and the payment card data structure (StructCB).

3. The method for processing transactional data according to claim 1, **characterized in that** the step of loading (20) a virtual payment card (vCB) comprises:
- a step of displaying (23) on a screen of the communication terminal, a set of virtual payment cards associated with the user;
- a step of selecting (24), a virtual payment card from the set of displayed payment cards.

4. The method according to claim 1, **characterized in that** it comprises, subsequent to the step of loading (10) the virtual payment terminal (vPos), a step of displaying (15) on a screen of the communication terminal, data representative of a switch to secure mode.

5. The method for processing transactional data according to claim 1, **characterized in that** the step of loading (20) a virtual payment card (vCB) comprises:
- a step of identifying (21) by said virtual payment terminal (vPos), the second secure space (SecSpace2) within which the virtual payment card (vCB) must be loaded; and
- a step of loading (22), within the first secure memory space (SecSpace1), an encapsulation module (ModEncaps).

6. The method for processing transactional data according to claim 5, **characterized in that** it comprises, for at least some of the data exchanged between said virtual payment terminal (vPos) and said virtual payment card (vCB), at least one step of transmitting a command (APDU) to said server (SrvVCB) comprising:
- a step of creating a frame header comprising at least one identifier of the virtual payment terminal (vPos) and one identifier of the virtual payment card (vCB);
- a step of filling a frame said header, said command, according to a determined data exchange protocol,
- a step of transmitting the frame to said server.

7. A device for processing transactional data representative of a payment made by a user from a communication terminal (TC), the device being **characterized in that** it comprises:
- means for loading a virtual payment terminal (vPos), within a first secure memory space (SecSpace1) of the communication terminal (TC), said virtual terminal (vPos) being in the form of a software module registered within a secure storage space of the communication terminal (TC);
- means for loading, within a second secure space (SecSpace2) located on a server (SrvVCB) connected to the communication terminal (TC) via a communication network (Ntwk), at least one virtual payment card (vCB), said virtual payment card (vCB) being instantiated by an emulation software module (modEmul) implemented in the form of an execution of a virtual machine;
- means for processing by the virtual payment terminal (vPos) a payment transaction, said processing means comprising:
- means for exchanging ADPU commands between said virtual payment terminal (vPos) and said at least one virtual payment card (vCB);
- means for constructing said payment transaction according to the protocols SEPA and/or EMV, for the implementation of said payment.

8. A communication terminal **characterized in that** it incorporates a device for processing transactional data according to claim 7.

9. A computer program product downloadable from a communication network and/or stored on a computer-readable medium and/or executable by a microprocessor, **characterized in that** it comprises program code instructions for the execution of a method for processing transactional data according to claim 1, when it is executed on a computer.
